# EUROPEAN PATENT APPLICATION

(11) **EP 0 745 867 A1**
(43) Date of publication of application: **04.12.1996**
(21) Application number: 96850104.9
(22) Date of filing: 29.05.1996
(51) Int. Cl.: G01S 5/00

(54) **GPS ready digital cellular telephone**

(30) Priority: 30.05.1995 US 452933
(71) Applicant: HE HOLDINGS, INC. dba HUGHES ELECTRONICS, Los Angeles, CA 90080-0028 (US)
(72) Inventor: Mohamadi, Farshad, San Diego, CA 92130 (US); Gandolfi, James F., La Jolla, CA 92037 (US); Cheah, Jonathon Y., San Diego, CA 92130 (US); Kaul, Pradeep, Damentown, ND 20878 (US)
(74) Representative: Karlsson, Leif Karl Gunnar

(57) **Abstract**

A cellular telephone system has an antenna (12,18) for receiving a location system signal such as GPS and a cellular signal, a location system receiver (10) coupled to the antenna (12), a mobile radio telephone transceiver (16), such as digital cellular, coupled to the antenna (18), and a processor (14) coupled to the global positioning system receiver (10) and to the cellular telephone transceiver (16). The global positioning system receiver employs a GPS demodulator (24,48) for demodulating a first position signal, a second position signal, and a third position signal from first, second and third earth orbit satellites (34,30,38). The cellular telephone transceiver (16) employs a receive channel (58) for demodulating an incoming portion of the cellular signal and generating an incoming intermediate frequency signal in response thereto, and a transmit channel (64) for modulating an outgoing intermediate frequency signal and for generating an outgoing portion of the cellular signal in response thereto. In addition, the cellular telephone transceiver (16) employs an interface circuit (62) for converting the incoming intermediate frequency signal and for converting an outgoing digital signal. The processor (14) determines (14) an approximate location of the cellular telephone system, encodes (14) an outgoing voice information signal, and decodes (14) the incoming intermediate frequency signal.

## Description

### BACKGROUND OF THE INVENTION

The present invention relates to a combined location system e.g. Global Positioning System (GPS) receiver and telephone transceiver e.g. digital cellular telephone transceiver wherein processing resources of the digital cellular telephone are also used to perform functions for the Global Positioning System receiver.

A system that has found utility in navigating and locating mobile objects is the NAVSTAR global positioning system (GPS). In addition to NAVSTAR, other systems, such as GEOSTAR and GLONASS, based on satellite signals have been or are being developed. Other systems use terrestrial signals such as the LORAN system.

Unfortunately, GPS and other radio location systems require a significant investment in receiving equipment in order to make use of the signals. Specifically, GPS requires an L-band antenna and a GPS receiver system installed in a housing, which are typically somewhat expensive.

GPS receivers have been combined with cellular mobile units in order to provide location information to a base unit, however, little or no cost efficiency is gained in such systems as heretofore proposed. One such system is illustrated in U.S. Patent No. 5,043,736, wherein a GPS receiver and a cellular telephone are combined so that position information generated by the GPS receiver can be sent to a base station through the cellular transceiver. As shown, the GPS receiver and cellular telephone are independent systems, configured so that location information from the GPS receiver can flow to the cellular telephone, and so that control and synchronization information can flow from the cellular telephone to the GPS receiver.

### SUMMARY OF THE INVENTION

The present invention provides a combined location system (e.g. GPS) receiver and radio telephone e.g. digital cellular telephone transceiver wherein processing resources of the digital cellular telephone are also used to perform functions for the Global Positioning System receiver.

The invention can be characterized as a telephone system employing an antenna, a location system receiver, a telephone transceiver, and a processor. The antenna receives a location signal and a telephony signal, and preferably includes electrically independent mechanically coupled antennas tuned for receiving each of such signals. Specifically, an L-band antenna is preferably used for receiving a GPS signal, and a UHF antenna is preferably used for receiving a telephony signal. The antenna is coupled to the global positioning system receiver, and to the cellular telephone transceiver.

The global positioning system receiver uses a GPS demodulator to demodulate a first position signal, a second position signal, and a third position signal, which make up the GPS signal. The first, second and third position signals are transmitted from first, second and third earth orbit satellites, respectively, and the GPS demodulator generates a digital data stream in response to the demodulation of such signals.

The cellular telephone transceiver has a receive channel, a transmit channel and an interface circuit. The receive channel is coupled to the antenna, demodulates an incoming portion of the cellular signal and generates an incoming intermediate frequency signal in response to such demodulation. Similarly, the transmit channel, which is also coupled to the antenna, modulates an outgoing intermediate frequency signal and generates an outgoing portion of the cellular signal in response to such modulation.

The interface circuit is coupled to the receive channel and to the transmit channel. The interface circuit converts the incoming intermediate frequency signal into an incoming digital signal, and converts an outgoing digital signal into the outgoing intermediate frequency signal.

The processor is coupled to and is shared by the global positioning system receiver and to the cellular telephone transceiver. In practice, the processor is modified with a firmware system, and, under the control of such firmware system, determines an approximate location at which the cellular telephone system is located. Such determination is made based on location information contained in the digital data stream provided by the GPS receiver. In addition, the processor encodes an outgoing voice information signal and generates the outgoing intermediate frequency signal. The processor also decodes the incoming intermediate frequency signal and generates an incoming voice information signal. The voice information signals are used, as is known in the art, to communicate analog voice information to and from a speaker and microphone within the cellular telephone system housing.

Thus, in the above described embodiment, a cellular telephone system is provided wherein processing resources of the digital cellular telephone are also used to perform functions for the Global Positioning System receiver. Sharing of processing resources results in a more cost effective design than with prior location and telephony transceiver combinations.

In one variation, the above described embodiment has a display, such as a liquid crystal display. The display is coupled to the processor, and displays information in response to a display signal. The display signal is generated by the processor in response to determining the approximate location of the cellular telephone system, and the information displayed indicates the approximate location. For example, the information displayed may be the latitude, longitude and altitude at the determined approximate location.

The present invention, in this variation, can thus be used by an operator of the cellular telephone system to visually display the location of the cellular telephone system. Having displayed the information, for example, the operator can verbally convey the displayed information to, e.g., emergency personnel in the event of an emergency, such as an automobile accident, the witnessing of a crime, or an automobile breakdown .

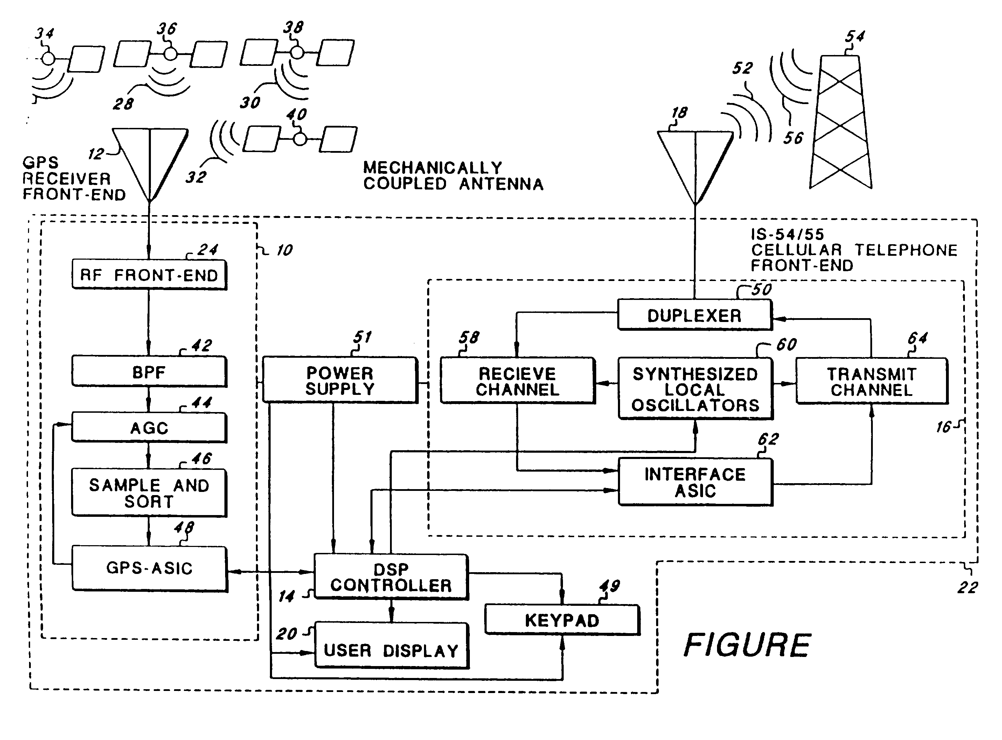

### BRIEF DESCRIPTION OF THE DRAWING

The above and other aspects, features and advantages of the present invention will be more apparent from the following more particular description thereof presented in conjunction with the following drawing wherein:

The FIGURE is a block diagram of a combined global positioning system (GPS) receiver and digital cellular-telephone transceiver made in accordance with one embodiment of the invention.

### DETAILED DESCRIPTION OF THE INVENTION

The following description of the presently contemplated best mode of practicing the invention is not to be taken in a limiting sense, but is made merely for the purpose of describing the general principles of the invention. The scope of the invention should be determined with reference to the claims.

Referring to the FIGURE, a Global Positioning System (GPS) receiver front end 10 (or GPS receiver) is shown coupled to an L-band antenna and to a digital signal processor 14 (DSP controller). Also shown is a cellular telephone front-end 16 (or cellular transceiver), which is coupled to a UHF antenna 18 and to the DSP controller 14. The DSP controller 14 is coupled to a user display 16 such as a light emitting diode (LED) display or a liquid crystal display (LCD). The GPS receiver 10, cellular transceiver 16, DSP controller 14 and user display 20 are all housed within a cellular transceiver housing 22, such as are known in the art. Note that the cellular transceiver housing 22 may in practice employ two housings, one for housing radio frequency components, and some digital components, and the other for housing the remainder of the digital components and for service as a cellular telephone handset, such as is known in the art. When two housings are employed, a coiled "telephone handset" cable is used to couple components within the two housings together.

Within the GPS receiver 10, the L-band antenna 12 is coupled to a radio frequency front-end 24. The radio frequency front-end 20 is an L-band radio frequency receiver that generates an intermediate frequency (IF) signal in response to first, second, third and fourth position signals 26, 28, 30, 32 received from first, second, third and fourth earth orbit satellites 34, 36, 38, 40, respectively. Note that while four position signals are preferred, ground position can be determined based on only three such signals. If altitude information, however, is desired, the fourth position signal is necessary for its determination. The position signals are received on two L-band frequencies: 1575.42 MHz and 1227.6 MHz. Synchronization of a pseudo-random (PRN) spreading code, which is 1.023 MHz wide, is acquired at the 1575.42 MHz frequency. Signals from each of the four earth orbit satellites 34, 36, 38, 40 arrive at the Global Positioning System receiver front end 10 at the L-band frequencies above. Each of the position signals 26, 28, 30, 32 has a different pseudo-random spreading code. (The ability to synchronize a 10.23 MHz wide spreading code is not precluded in the present embodiment.)

Signals received by the L-band antenna 12 are passed to the radio frequency front-end 24. The design of a suitable radio frequency front-end is well known in the art. Within the radio frequency front-end, an L-band pre-selection filter is followed by a Low Noise Amplifier (LNA). A downconverter including a frequency synthesizer, a mixer and an Intermediate Frequency (IF) amplifier, is designed with appropriate ancillary circuitry so that the Noise Figure (NF) of the system is preserved and a desirable Intercept Point (IP) is achieved. Design of such a downconverter is well known in the art. Cascaded downconverters, multiple downconverters, or a downconverter with multiple IF outputs may be used for increased performance. (Intermediate frequency output capable of passing a 10.23 MHz wide PRN code is contemplated by the inventors.

An Intermediate Frequency (IF) is chosen suitable for operation with the sample and sort circuit 46. Selection of the intermediate frequency is dependent on the particular implementation used for the present embodiment, and especially the sample and sort circuit 46.

The radio frequency front-end 24 is coupled within the GPS receiver 10 to a bandpass filter 42, and passes the intermediate frequency (IF) signal thereto.

The bandpass filter 42 is a low frequency intermediate frequency (IF) bandpass filter 42 that serves as a noise rejection filter before the IF signal is digitized. The bandpass filter 42 has a center frequency of less than 30 MHz and a bandwidth of about 1 MHz (for lower resolution GPS C/A code signals) or about 10 MHz (for high resolution GPS P code signals).

The bandpass filter 42 is coupled within the GPS receiver to an automatic gain control 44 that amplifies or attenuates the IF signal as is necessary to set up a suitable signal digitization threshold.

The automatic gain control 44 is coupled to a sample and sort circuit 46 that digitally samples and filters the amplified or attenuated IF signal from the automatic gain control 44. The sample and sort circuit 46 receives the position signals 26, 28, 30, 32 at an optimum threshold for its operation and it generates from the position signals 26, 28, 30, 32, in-phase and quadrature phase samples of the position signals 26, 28, 30, 32. The sample and sort circuit 46 preferably uses a sampling rate of at least the Nyquist sampling rate.

The sample and sort circuit 46 is coupled to a Global Positioning System (GPS) application specific integrated circuit 48 (ASIC). The GPS ASIC 48 receives the digitized and digitally filtered IF signal from the sample and sort circuit 46. GPS ASIC 48 de-spreads the spread pseudo-random codes from the satellites 34, 36, 38, 40 using a very high precision time reference, such as is commonly known in the art. The ability to simultaneously de-spread three to eight channels of signal is typical in the design of the GPS ASIC 48.

The GPS ASIC 48 tracks the satellite signals and measures the Time Of Arrival (TOA) referenced to its local clock as well as demodulates 50 bps (bits per sec) data imbedded in the spread spectrum signals. The design of the GPS ASIC 48 structure is commonly known, an example of which is shown in "TIDGET-Low cost GPS module" from NAVSYS Corporation of Colorado, 1990. A suitable GPS ASIC 48 is a commonly known and available integrated circuit. Preferably, however, a simplified GPS ASIC is used by the present embodiment to extract GPS information from the spread spectrum modulation of the digitized and digitally filtered IF signal. The simplified GPS ASIC can be produced less expensively than present commercially available GPS ASICs, thereby further exploiting the cost efficiency attainable with the present embodiment.

The GPS ASIC 48 also is coupled to the automatic gain control and adjusts the gain or attenuation applied by the automatic gain control 44 as a function of the amplitude of the digitized and digitally filtered IF signal received from the sample and sort circuit. Thus, the GPS ASIC 48, along with the automatic gain control 44, functions as a closed-loop negative feedback control system that reduces and increases the amplification (or increases and reduces the attenuation) applied by the automatic gain control 44 in response to increasing or decreasing amplitude of the digitally filtered IF signal.

The GPS ASIC 48 is coupled to the DSP controller 14, and passes the GPS information extracted from the digitized and digitally filtered IF signal to the DSP controller 14.

The Digital Signal Processor 14, extracts incoming GPS message data, TOA measurements and satellite location messages, and executes position determination algorithms based on triangulation. A location update and correction algorithm is also carried out by the Digital Signal Processor 14 based on Kalman filtering techniques and a location signal is generated in response thereto. Kalman filter design is a well known art. Position updates of high accuracy can be made once every second or faster. An initial cold start acquisition time needed to get a position fix is typically between 15 to 20 seconds. A reacquisition of the position fix after momentary signal loss is less than five seconds for a three to five channel GPS receiver.

After generating the location signal in this way, the DSP controller 14 passes the location signal to the user display 20 which selectively displays the location of the combined GPS receiver and cellular telephone transceiver as latitude, longitude, and, preferably, altitude. Such display preferably displays the location only when a SPST momentary switch (e.g., a "location" button, or a "second function" key together with a numeric key, such as are typically found on a keypad 49 of the cellular telephone handset) is closed. The keypad 49 is coupled to the DSP controller 14. Advantageously, by selectively operating the display in this way, the amount of power consumed over time by the combined GPS receiver and cellular telephone transceiver from a power supply 51 coupled to the GPS receiver and to the cellular telephone transceiver is reduced. The power supply 51 is also coupled to the DSP controller 14, the keypad 49, and the display 20.

After the SPST momentary switch is released, the display 20 can continue to display the location information accompanied by a lapse-time indication for a prescribed period of time, e.g., 10 seconds. The lapse-time indication shows the time that has elapsed since the last position fix was made by the present embodiment. In the event global positioning system functions are deselected, display of the location information and the lapse-time indication are disabled.

Note that in some embodiments, the determined latitude, longitude and altitude, instead of or in addition to being displayed on the display 20, may be transmitted to the base station 54 by the cellular transceiver 16, described below. Such transmission can be performed in response to the "location" button on the keypad 49 being depressed, or can be sent in response to an inquiry signal transmitted by the base station 54. These embodiments, however, are not preferred, as they require significant modifications to existing cellular infrastructure to implement.

Within the cellular transceiver 16, the UHF antenna 18 is coupled to a duplexer 50. The duplexer 50 transfers outgoing radio frequency signals 52 (or outgoing cellular signals) to the UHF antenna 18 for transmission to a base station 54. In addition, the duplexer 50 receives incoming radio frequency signals 56 (or incoming cellular signals) that are transmitted from the base station 54 and received into the UHF antenna 18. The duplexer 50 is coupled to a receive channel 58 that includes a radio-frequency-to-intermediate-frequency mixer, and a demodulator. The receive channel 58 is coupled to a synthesized local oscillator 60 that provides a modulation/demodulation signal to the receive channel 58, such as is known in the art.

The receive channel 58 is also coupled to an interface application specific integrated circuit (ASIC) 62. The interface ASIC 62 is used to implement an FM frequency shift keying (FSK) receiver, an FM message processor, transmit and receive timing generators, interfaces to CODECs, buffering, fade detection, FEC encoding and decoding, a fixed point divider unit (for Vocoder (Voice Coder)), a phase lock loop (for generation of a CODEC clock), miscellaneous input/output circuitry and glue logic for processor interfaces.

The interface ASIC 62 is coupled to a transmit channel 64 that generates the outgoing radio frequency signal 52 (outgoing cellular signal). The transmit channel 64 is coupled to the duplexer 50 and provides the outgoing radio frequency signal 52 thereto for transmission through the UHF antenna 18. The transmit channel includes a transmitter intermediate-frequency-to-radio-frequency mixer and a modulator. The transmit channel 64 is coupled to the synthesized local oscillator 60, which generates the modulation/demodulation signal. The transmitter intermediate-frequency-to-radio-frequency mixer utilizes the modulation/demodulation signal to modulate the outgoing radio frequency signal 52.

The interface ASIC 62 is also coupled to the DSP controller 14, and the DSP controller 14 is utilized within the cellular transceiver 16 to perform the following functions: Vocoder (Voice Coder) analysis/synthesis, hands-free voice switching, digital channel demodulation/equalization, FM audio transmission/reception, FM SAT detection and generation, FM FSK transmission, FM message handling/call processing, digital call processing/control, user interface monitor/diagnostic/testing, SACCH encoding/decoding/queuing, authentication and key generation, signaling privacy, voice recognition and voice response. The DSP controller 14 is also coupled to the synthesized local oscillator 60 and is used by the cellular transceiver 16 to analyze and adjust the timing and frequency of the modulation/demodulation signal generated by the synthesized local oscillator 60, such as would be needed to correct timing error, or clock rate error.

The DSP controller 14 also uses the user display 20, to which it is coupled, to display information relative to the cellular transceiver 16. For example, the user display 20 is used to display the telephone number being dialed by the cellular transceiver 16, and/or to display a signal strength meter indicative of the strength of the incoming radio frequency signal 56.

In this way, a GPS receiver 10 and a cellular transceiver 16 are combined within a cellular telephone housing 22, and share a common DSP controller 14 and user display 20. As the cellular telephone housing, DSP controller 14 and user display 20 are typically two of the more costly components involved in a GPS receiver 10 or a cellular transceiver 16, substantial commercial advantage is gained by the combination of these two devices and their sharing of the DSP controller 14 and user display 20. Further advantage can be achieved by combining the L-band antenna 12 with the UHF antenna 18, thereby eliminating the need for the two antennas. Such combination may include making the antennas a single antenna tuned to a frequency intermediate the frequency of the position signals 26, 28, 30, 32 and the radio frequency signals 52, 56. Preferably however, the antennas 12, 18 are electrically separate as shown in the FIGURE, so as to optimally tune each of the antennas for the particular range of frequencies that they are to receive, and are mechanically coupled into a single mechanical unit, so as to minimize installation complexity and maximize aesthetic appeal.

While the preferred embodiment of the invention has been described in the context of a digital cellular telephone which typically includes a powerful DSP such as DSP controller 14 of the Figure, it is equally applicable to other types of telephony systems, including analog cellular telephony, mobile satellite telephony systems, personal communications services (PCS) systems, trunked, packet radio, dispatch and specialized mobile radio systems, including Digital Specialized Mobile Radio (DSMR) and many other two way communications systems. Mobile satellite telephony systems typically use a portable or mobile subscriber unit that communicates directly through a satellite to another portable or mobile or to a fixed gateway into a switched telephony network. Many different systems are under development (e.g. Inmarsat-P or ICO-Global, Iridium, Asia-Pacific Mobile Telephone) and some, for example the American Mobile Satellite Company (AMSC) and Inmarsat-M and C systems, are already in service. In addition, while the preferred embodiment has been described in the context of a GPS receiver, the combination can be made with a number of different types of radio positioning systems, such as GLONASS or LORAN.

While the invention herein disclosed has been described by means of specific embodiments and applications thereof, numerous modifications and variations could be made thereto by those skilled in the art without departing from the scope of the invention set forth in the claims.

## Claims

1. An integrated radio communications and location system comprising:
an antenna system (12, 18) for receiving radio frequency signals;
a telephony receiver (16) coupled to the antenna system for transceiving telephony radio signals, for example terrestrial cellular telephony, personal communications service or mobile satellite telephony signals;
a location system receiver (10) coupled to the antenna system (12, 18) for receiving location system radio signals, for example GPS, GLONASS, LORAN, and GEOSTAR signals;
a controller (14), operated in accordance with a control program, coupled to the telephony receiver for controlling the operation of the telephony receiver in accordance with the control program and coupled to the location system receiver for controlling the operation of the location system receiver;
a digital signal processor (14) coupled to the controller for processing the telephony radio signals and for processing the received location system radio signals and generating a signal indicative of the location of the integrated system in response thereto;
the controller also being coupled to the digital signal processor for receiving the signal indicative of the location of the integrated system and generating a location signal in response thereto, for example, the latitude, longitude and altitude of the integrated system; and
a display (20) coupled to the controller for displaying information based on the location signal and information regarding the telephony radio signals.

2. The system of Claim 1 wherein the location system receiver (10) performs demodulation, sampling, despreading and time measurements on the location system radio signals.

3. The system of any one or more of the preceding claims wherein the digital signal processor (14) performs position determination algorithms, location updates and location corrections using the location system radio signals from the location system receiver.

4. The system of any one or more of the preceding claims wherein the transmission of the location signal is performed in response to a query received by the telephony receiver (16) and conveyed to the controller (14) from the remote location (54) during a telephone call.

5. The system of any one or more of the preceding claims wherein the telephony receiver (16) further comprises:
a receive channel (58), coupled to the antenna system, for demodulating an incoming portion of the radio telephony signal and generating an incoming intermediate signal in response thereto;
a transmit channel (64), coupled to the antenna, for modulating an outgoing intermediate signal and for generating an outgoing portion of the radio telephony signal in response thereto; and wherein the digital signal processor (14) further comprises:
means for encoding an outgoing voice signal and generating the outgoing intermediate signal;
means for decoding the incoming intermediate signal and generating an incoming voice signal.

6. The system of any one or more of the preceding claims further comprising an interface circuit (62), between the digital signal processor (14) and the receive and transmit channels (58, 64), for performing error correction and timing synchronization for incoming intermediate frequency signals and outgoing intermediate signals.

7. The system of any one or more of the preceding claims wherein the controller (14) further performs, message processing, call processing and authentication.

8. The system of any one or more of the preceding claims wherein the controller (14) is coupled to at least one oscillator (60) in the telephony receiver (16) and further controls the timing and frequency of the oscillator.

9. The system of any one or more of the preceding claims wherein the controller (14) further comprises means for generating a display signal in response to the determining of the approximate location; and wherein the system further comprises a display device (20) coupled to the controller for displaying information in response to the display signal indicating the approximate location.

10. The system of Claim 9 further comprising:
a switch (49) for selectively activating the display device to display the location information.
